# EUROPEAN PATENT APPLICATION

(11) **EP 1 439 729 A2**
(43) Date of publication of application: **21.07.2004**
(21) Application number: 04009772.7
(22) Date of filing: 26.03.1997
(51) Int. Cl.: H04Q 7/38

(54) **Routing a data signal to a ported mobile station within a telecommunications network**

(30) Priority: 26.03.1996 US 14238 P; 03.06.1996 US 655088
(62) Divisional of application: 97916206.2
(71) Applicant: Ericsson Inc., Plano, TX 75024 (US)
(72) Inventor: Patel, Mahesh Patel, Plano, Texas 75023 (US); Joensuu, Erkki, 02580 Siuntio (FI)
(74) Representative: Mohsler, Gabriele

(57) **Abstract**

A method and node are provided for retrieving information associated with a mobile station being assigned to a home location register HLR, which has stored the information associated with the mobile station, wherein a first signal identifying a mobile station directory number is transmitted from a gateway node to a centralized database, said first signal requesting subscriber information and having an originating address comprising a gateway node address and a destination address comprising an address for the centralized database, and wherein responsively a second signal is received from said particular HLR at the gateway node, the second signal including the requested subscriber information, and said second signal having an originating address comprising the network address of the particular HLR and a destination address comprising the address of the gateway node as extracted from the originating address of the first signal. Furthermore, a database, an HLR and related methods are provided.

## Description

### PRIORITY UNDER 35 U.S.C. 109(e) & 37 C.F.R. 1.78(a) (1)

This non provisional application claims priority based upon a prior U.S. Provisional Patent Application entitled "Routing A Data Signal To A Mobile Station Within A Telecommunications Network", Serial No. 60/014,238, filed March 26, 1996, in the names of Erkki Joensuu, Mahesh Patel, and Gung-Shih Chien.

### CROSS REFERENCES TO RELATED APPLICATIONS

This nonprovisional U.S. Patent Application contains subject matter related to copending Nonprovisional U.S. Patent Application Serial No.08/656,723, entitled "Routing An Incoming Call To A Ported Mobile Station Within A Telecommunications Network", filed June 3, 1996 (Attorney Docket No. 27943-00065), hereby incorporated by reference herein.

### BACKGROUND OF THE INVENTION

### Technical Field of the Invention

The present invention relates to a telecommunications network system and, in particular, to the routing of a data signal to a mobile station relocated from a first home location register to a second home location register.

### Description of Related Art

Within the Global System for Mobile (GSM) Communication or the Personal Communications System (PCS), each mobile station is assigned a unique identification number known as a Mobile Station Integrated Services Digital Network (MSISDN) number. A MSISDN number is dialed whenever a caller wants to communicate with a particular mobile station. The telecommunications network, by analyzing a part of the dialed MSISDN number, determines the associated home location register (HLR) which serves that particular mobile station and stores routing information identifying the mobile switching center (MSC) currently serving the mobile station. By retrieving and utilizing such routing information, the telecommunications network is able to locate the mobile station in response to an incoming call for establishing a speech connection between the incoming caller and the mobile station.

Mobile subscribers often want to relocate from a first service area served by a first HLR to a second service area served by a second HLR. By relocating, a particular mobile station's pre-existing subscriber agreement with the first HLR is terminated and a new subscription agreement with the second HLR is established. However, specific series of MSISDN numbers are preassigned to each HLR. By relocating from one HLR to another, the mobile station accordingly must be assigned a new MSISDN number pre-assigned to the new second HLR. Changing the assigned MSISDN number is a cumbersome process in part because the mobile subscriber has to take his mobile station in for service and also inconveniently notify all relevant parties of his new MSISDN number (directory number). Accordingly, there is a need for a scheme which would enable a mobile station to relocate from a first HLR to a second HLR without having to change the assigned MSISDN number.

### SUMMARY OF THE INVENTION

The present invention provides a method and apparatus for transporting a telecommunications data signal to a mobile station relocated from a first home location register (HLR) to a second HLR. Such a data signal includes an incoming voice data signal and a Short Message Service (SMS) data signal. A network address representing an HLR associated with a mobile station and a mobile identification number associated with that mobile station are correlated and stored in a centralized database. Whenever an incoming data signal is received by a gateway node within the telecommunications network, a signal requesting routing information for that data signal is transmitted to the centralized database instead of to the serving HLR. The centralized database retrieves the network address of the HLR associated with that given mobile station and reroutes the request signal to the associated HLR. Upon receipt of the request signal, the associated HLR retrieves and transmits the routing instruction indicating the network address of the mobile switching center (MSC) currently serving that given mobile station back to the gateway node. The gateway node receives the routing information and routes the data signals to the serving MSC for transportation to the given mobile station.

### BRIEF DESCRIPTION OF THE DRAWINGS

A more complete understanding of the method and apparatus of the present invention may be had by reference to the following detailed description when taken in conjunction with the accompanying drawings wherein:
FIGURE 1 is a block diagram illustrating the network interconnection of multiple Public Land Mobile Networks (PLMN) to a Public Switched Telephone Network (PSTN);
FIGURE 2 is a block diagram illustrating the communication of a Short Message Service (SMS) message between an SMS operator and a mobile station;
FIGURE 3 illustrates a mobile station relocating from a first home location register (HLR) associated with a first PLMN to a second HLR associated with a second PLMN;
FIGURE 4 illustrates a mobile station relocating from a first home location register (HLR) to a second HLR within the PLMN;
FIGURE 5 is a block diagram illustrating a virtual home location register (VHLR) communicating with a gateway mobile switching center (GMSC) for rerouting incoming signals to a relocated mobile station;
FIGURE 6 is a signal sequence diagram for illustrating a virtual home location register (VHLR) communicating with a gateway mobile switching center (GMSC) for rerouting incoming signals to a relocated mobile station;
FIGURE 7 is a block diagram illustrating a VHLR routing incoming signals to a mobile station that has been relocated from a first HLR to a second HLR within the same PLMN;
FIGURE 8 is a block diagram illustrating a centralized database communicating with a Short Message Service - Gateway Mobile Switching Center (SMS-GMSC) for rerouting an incoming SMS data to a relocated mobile station;
FIGURE 9 is a signal sequence diagram illustrating a centralized database communicating with an SMS-GMSC for rerouting an incoming SMS data to a relocated mobile station; and
FIGURE 10 is a block diagram illustrating the data structure of a database table for correlating a mobile identification number representing a mobile station with a network address for the associated HLR.

### DETAILED DESCRIPTION OF THE DRAWINGS

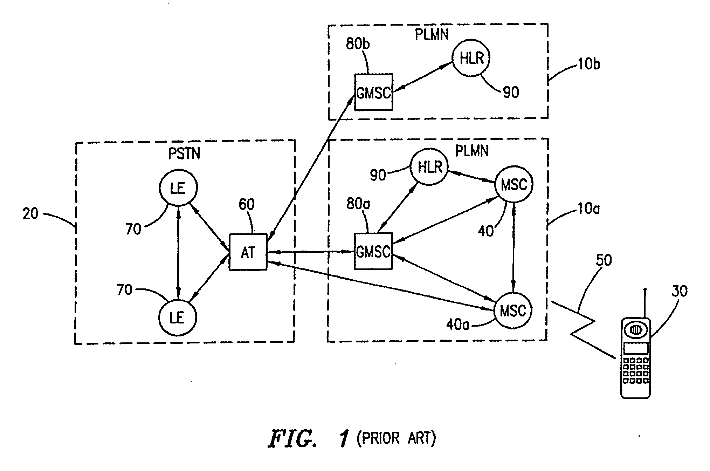

FIG. 1 is a block diagram illustrating the network interconnection of multiple Public Land Mobile Networks (PLMN) 10 to a Public Switched Telephone Network (PSTN) 20. A mobile station 30 (also known as a mobile terminal or equipment) is associated with one of the PLMNs 10 as the Home PLMN 10a. Within each PLMN 10, thereare a number of different mobile switching centers (MSC) 40 servicing the geographic area covered by the network. A mobile station 30 communicates with one of the MSCs 40 via over-the-air communications links 50. The mobile station 30 served by one PLMN 10 then communicates with other wireline and wireless terminals by connecting to the PSTN 20. The access tandem (AT) 60 within the PSTN 20 routes the mobile calls generated from the one PLMN 10 to wireline terminals serviced by one of its local exchanges (LE) 70 within the PSTN 20, or to another PLMN 10 by a way of its gateway mobile switching center (GMSC) 80.

For an incoming call intended for the mobile station 30, the incoming call is first routed to the GMSC 80a serving the home PLMN 10a. The GMSC 80a sends a signal requesting routing information to the home location register (HLR) 90 for that mobile station 30. The HLR 90 (which stores subscriber information and keeps track of the current location of the mobile station 30) then requests a roaming number from the MSC currently serving the mobile station 30. The requested roaming number is subsequently received by the HLR and returned to the GMSC 80a. The returned routing instruction includes a network address indicating which MSC 40 (for example, MSC 40a) is currently serving the mobile station 30. Upon receipt of such routing information, the GMSC 80a transmits the incoming call to the serving MSC 40a. The serving MSC 40a then establishes a speech connection with the mobile station 30 located with its MSC serving area.

With the development of the Global System for Mobile (GSM) communications and the Personal Communications System (PCS), a number of advanced supplementary services have been introduced. One example is the Short Message Service (SMS) system for transmitting alphanumeric characters between an SMS operator and a mobile station. Once the SMS messages transporting the alphanumeric characters are received by the mobile station, the character data are written into a buffer within a Subscriber Identity Module (SIM card) attached to the mobile station. Such SIM card stored data can later be displayed or manipulated for further application by the subscriber.

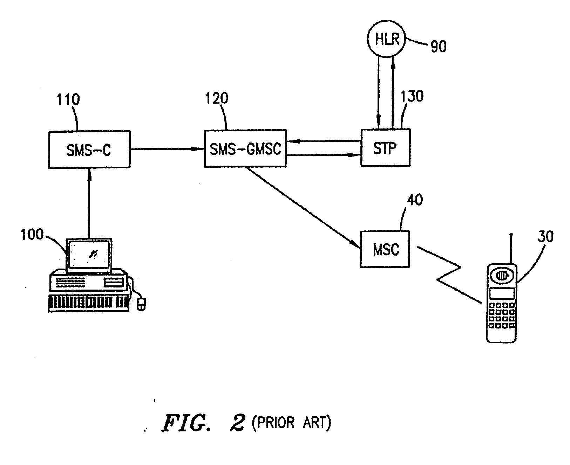

Reference is now made to FIG. 2 where a block diagram illustrating the communication of a Short Message Service (SMS) message between an SMS operator 100 and a mobile station 30 is shown. The SMS operator 100 sends a string of alphanumeric characters to the Short Message Service Center (SMS-C) 110 to be transmitted to the mobile station 30. The SMS-C 110 encapsulates the character data into an SMS message and routes the SMS message to a Short Message Service - Gateway Mobile Switching Center (SMS GMSC) 120. In a manner similar to the operation of the GMSC with respect to incoming voice calls, the SMS-GSMC 120 interrogates the HLR 90 for routing information (where the mobile station 30 is currently located) via a Signal Transfer Point (STP) 130. After receiving the requested routing information from the HLR 90, the SMS-GMSC 120 subsequently routes the message to the MSC 40 serving the mobile station's current location. The mobile station 30 is paged and a connection is set up between the mobile station 30 and the network, as in the normal call setup case of FIG. 1. However, if the mobile station 30 is already busy, the paging is not performed because the network already knows that the mobile station is accessible. If the connection has been successful, and thereby the mobile station 30 authenticated, the MSC 40 delivers the SMS message to the mobile station 30 over one of the control data channels. A control data channel such as a Stand-alone Dedicated Control Channel (SDCCH) is used instead of a traffic channel (TCH) to allow connectionless data communications. After receiving the SMS message encapsulating the character data, the mobile station 30 acts merely as a buffer and passes the data to the attached SIM card (not shown in FIG. 2) for storing in a buffer or memory device. Lastly, if the delivery has been successful, a successful delivery report is sent from the MSC 40 to the SMS-C 110. Otherwise, a failure report is generated.

With the continuing development in the mobile telecommunications technology and the increasing number of mobile subscribers, an innovative concept called "number portability" is becoming popular. The number portability concept allows a mobile subscriber to relocate or "port" from an existing service area to a new PLMN area or HLR area without changing the mobile subscriber's assigned MSISDN number or directory number. By not changing the assigned MSISDN number, the mobile subscriber need not have his mobile station manually serviced to encode a new MSISDN number. The mobile subscriber also need not inconveniently notify his friends and associates of his new MSISDN number.

Number portability also allows more efficient usage and better management of the network resources. If a PLMN comprises a number of HLRs, and the work load or capacity is unevenly distributed across the network, it would be advantageous to transfer some of the subscription agreements or subscriber information from one of the HLRs with overloaded capacity to another HLR with lesser load without changing the MSISDN numbers assigned to the associated mobile stations. By reallocating some of the subscriber information and evenly distributing the work load, the PLMN is better able to manage its resources and work-load.

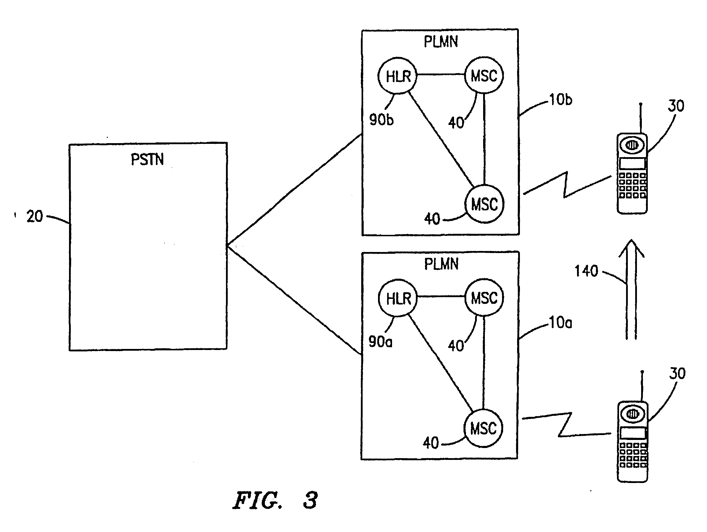

Reference is now made to FIG. 3 where a mobile station 30 associated with a first HLR 90a within a first PLMN 10a is shown relocating or porting 140 to a second HLR 90b within a second PLMN 10b (an inter-PLMN number portability) . The mobile station 30 is initially registered with the PLMN 10a as the home PLMN. All incoming calls either from the PSTN 20 or another PLMN10b are received by the GMSC (not shown in FIG. 3, see FIG. 1) within the PLMN 10a and accordingly routed to the serving MSC 40. As described previously, the GSMC properly routes an incoming call to the serving MSC 40 because the dialed MSISDN number includes a value indicative of which HLR within the home PLMN 10a is storing the requisite subscriber information. Consequently, the GMSC analyzes the received MSISDN number, determines the appropriate HLR, requests routing information from the determined HLR, and then routes the incoming call to the appropriate MSC.

The mobile station 30 terminates his subscription agreement with the existing HLR 90a and registers with the new HLR 90b within the new PLMN10b without changing his MSISDN number. However, because the MSISDN number has not been changed to reflect the new HLR 90b and the new PLMN 10b, all future incoming calls are still routed to the old PLMN 10a. The GSMC within the PLMN 10a is not able to reroute the received incoming calls to the relocated mobile station 30 because the GMSC is no longer able to determine the correct HLR storing the subscriber information by merely analyzing the received MSISDN number.

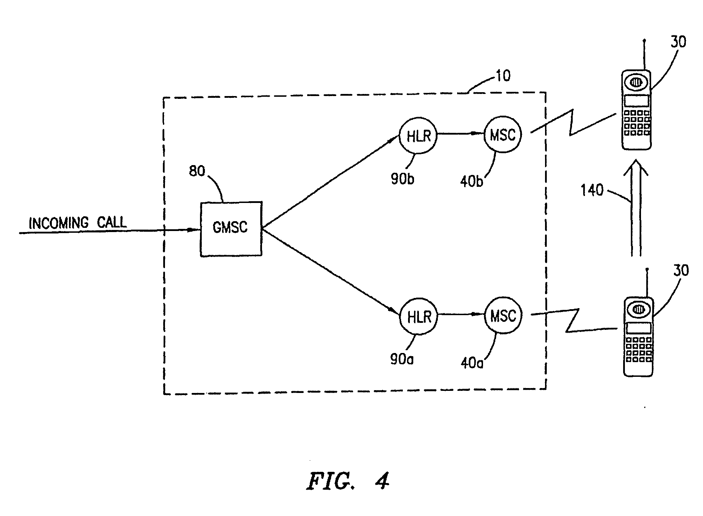

FIGURE 4 further illustrates a mobile station 30 relocating 140 from a first HLR 90a to a second HLR 90b within the same PLMN 10 (an intra-PLMN number portability) where the above problem of not locating the correct HLR 90 still exists. If the mobile station 30 relocates from a service area served by an MSC 40a closely associated with the HLR 90a to a service area served by an MSC 40b closely associated with the HLR 90b, it is efficient to register the mobile station 30 with the closer HLR 90b to minimize the signaling time and distance between the mobile station 30 and its associated HLR. Furthermore, as described previously, if the PLMN 10 has a number of HLRs 90 with unevenly distributed work load, the telecommunications network performs much more efficiently when some of the subscriber information are transferred over to a lesser used HLR for maximized use of the network resources. However, because of the unaltered MSISDN number, the GMSC 90 is still requesting routing information from the old HLR 90a when the mobile station 30 has already been ported to the new HLR 90b. As a result, incoming calls are not properly routed to the mobile station 30. Accordingly, there is a need for a separate mechanism to reroute incoming signals towards the new HLR serving a ported mobile station.

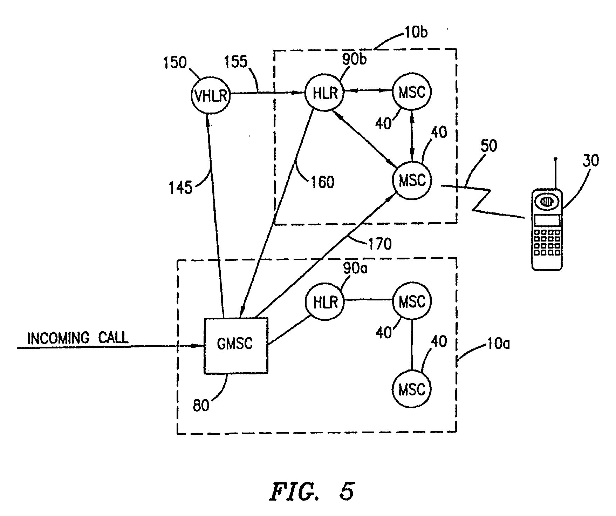

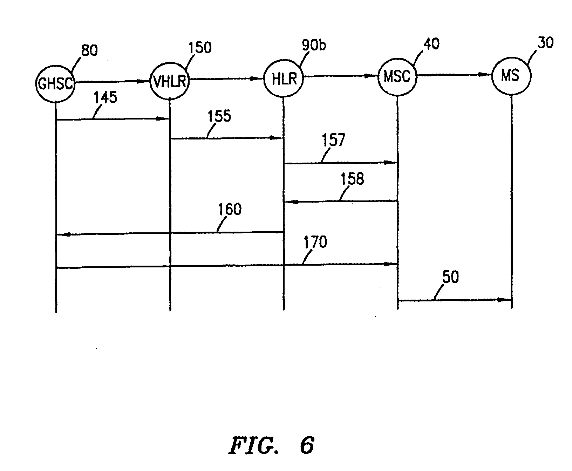

In accordance with the teachings of the present invention, reference is now made to both FIGS. 5 and 6 illustrating the use of a virtual home location register (VHLR, centralized database) 150 communicating with a gateway mobile switching center (GMSC) 80 for rerouting incoming signals to a relocated mobile station 30. The mobile station 30 used to be associated with the PLMN 10a by having its subscriber information stored in the HLR 90a. Since its MSISDN number is one of the series of numbers assigned to the HLR 90a, an incoming call is automatically first routed to the GMSC 80 within the PLMN 10a. The GMSC 80 transmits a routing information request signal 145 to the VHLR 150 in accordance with the teachings of the present invention instead of to the home HLR as in the prior art. The VHLR 150 can be associated independently from any particular PLMN 10 and be provided and maintained by a third party operator to service the inter-PLMN number portability as shown in FIG. 5. By looking up its correlation table using the received MSISDN number, the VHLR 150 is able to determine the network address of the HLR 90b currently serving the mobile station 30. Since the VHLR 150 is interfaced directly on top on the Signal Connection Control Point (SCCP) layer of the Signaling System No. 7 (SS7) telecommunications protocol, there is no need for the VHLR 150 to alter the originating point code (OPC) or Global Title (GT) address. Only the destination point code (DPC) or GT address is modified to represent the new home HLR 90b. No other parameters or contents are altered by the VHLR 150. Moreover, since the VHLR 150 is implemented as an SCCP user and has functions to translate a given MSISDN number to the corresponding HLR address, the VHLR can be placed in any node that has the Message Transfer Part (MTP) layer and the SCCP layer capabilities such as a signal transfer point (STP) or GMSC.

The routing instruction request signal is then rerouted from the VHLR 150 to the HLR 90b (signal 155) by changing the appropriate SCCP destination address. The HLR 90b then retrieves and transmits the requested routing information back to the GMSC 80 via a signal 160. As described previously, the HLR 90b requests and receives a roaming number from the serving MSC 40 (signal links 157-158). The routing information received from the serving MSC can be transmitted directly from the HLR 90b to the GMSC 80 without going through the VHLR 150 because the OPC or GT address still represents the GMSC 80. Using the received routing information, the GMSC 80 routes the incoming call to the MSC 40 serving the mobile station 30 via a signal 170. The MSC 40 then pages the mobile station 30 and establishes a speech connection between the incoming caller and the mobile station 30 over a radio link 50. Accordingly, by maintaining a separate centralized database for storing data correlating each mobile station's MSISDN number with its associated HLR network address, a mobile station can freely register with a new HLR without altering his MSISDN number.

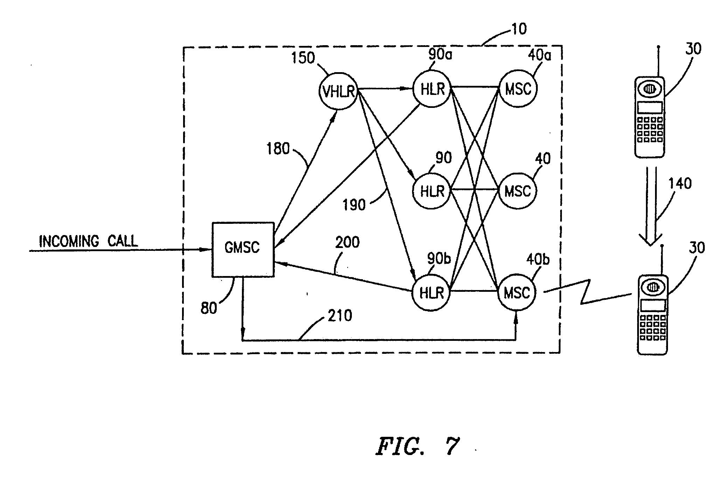

The VHLR 150 can further be utilized within a single PLMN to provide better management of the network resources. Reference is now made to FIG. 7 where a block diagram illustrating a VHLR 150 routing incoming signals to a mobile station 30 that has been relocated from a first HLR 90a to a second HLR 90b within the same PLMN 10 is shown. As an illustration, the HLR 90a serving more populated geographic areas may serve a majority of the subscriber information while the HLR 90b with the exact same system capacity may serve only a small portion of the overall network capacity. In order to more evenly distribute the work load, the PLMN 10 transfers some of the subscriber information from the HLR 90a to the HLR 90b. By distributing the work load without changing the MSISDN numbers assigned to the transferred mobile subscribers, the PLMN 10 can better utilize and manage its network resources without inconveniencing the mobile subscribers.

The mobile subscriber may also relocate from a first geographic area served by a MSC 40a to a second geographic area served by a MSC 40b within the same PLMN 10 (as illustrated by the move 140). Even though each MSC 40 within the PLMN 10 has access to any one of the HLRs 90, certain MSCs are located closer to a particular HLR than the rest. By transferring the mobile subscriber's subscriber information to the HLR located closer to the new MSC, the PLMN 10 can reduce the access time for signal and data transfer.

Accordingly, when an incoming call is received by the GMSC 80, the GMSC 80 transmits a signal 180 requesting routing information to the VHLR 150 within its own PLMN 10. The VHLR 150 determines the network address representing the HLR 90b currently serving the mobile station 30 and reroutes the request signal 190 to the HLR 90b. The HLR 90b retrieves and transmits the requisite subscriber information from its database to the GMSC 80 via a signal 200. Utilizing the received routing information, the GMSC 80 routes the incoming call to the MSC 40b serving the geographic area the mobile station is currently located via a signal 210. The MSC 40b in turn establishes a speech connection with the mobile station 30 using a traffic channel (TCH).

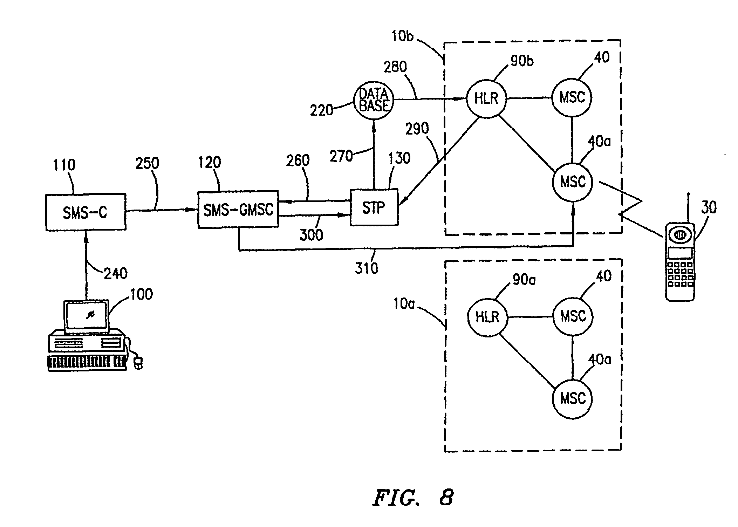

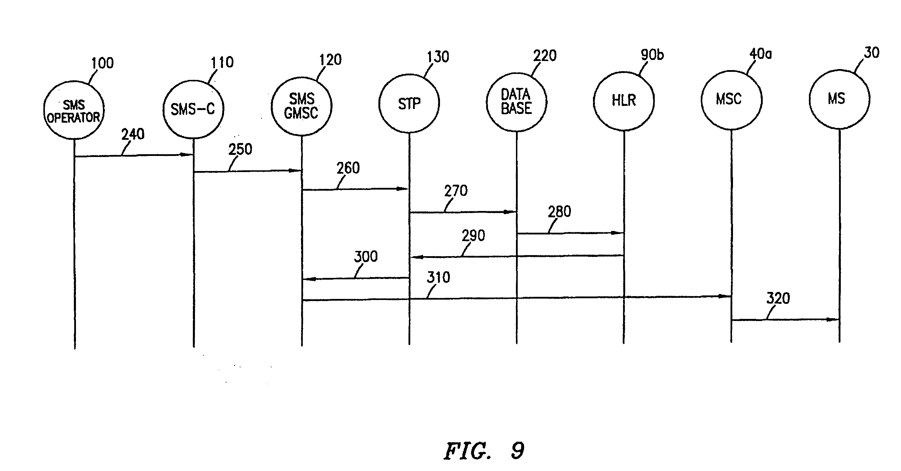

Now reference is made to both FIGS. 8 and 9 where a centralized database 220 communicating with a Short Message Service - Gateway Mobile Switching Center (SMS GMSC) 120 for routing an incoming SMS data to a ported mobile station 30 is shown. As described in FIG. 2, unlike incoming voice calls, SMS signals are first received by the SMS-GMSC 120 who in turn determines the appropriate HLR address and reroutes the received data to the mobile station 30. The SMS operator 100 sends a string of alphanumeric characters to the Short Message Service Center (SMS-C) 110 to be transmitted to the mobile station 30 via a signal 240 such as an X.25 packet. The SMS-C 110 encapsulates the character data to an SMS message and routes the message to an SMS-GMSC 120 via a signal 250. Similar to the GMSC in FIG. 5 for handling incoming voice calls in accordance with the teachings of the present invention, the SMS-GMSC 120 sends a signal requesting routing instruction to the centralized database 220 via a signal 260 if the translation type (TT) assigned to the received data has the value of ten (10). The SCCP TT parameter value is assigned by the SMS operator 100 when transmitting the alphanumeric characters to the SMS-C 110. The SCCP TT parameter value of ten indicates that this message is intended for a mobile station which could have been ported from one HLR to another. Therefore, the SMS-GMSC 120 routes the request signal to the centralized database 220 instead of the HLR 90a as indicated by the received MSISDN number. The actual request signal may go through a number of STPs 130 who in turn redirect the request signal to the centralized database 220 (signal 270). The centralized database 220 determines the network address representing the HLR 90b currently serving the mobile station 30 and reroutes the request signal to the HLR 90b (signal 280). The HLR 90b retrieves and transmits the requested subscriber information from its database back to the SMS-GMSC 120 via a signal 290. The return signal may also go through a number of STPs 130 (signal 300). Utilizing the received routing instruction, the SMS-GMSC 120 routes the incoming SMS data to the MSC 40a serving the geographic area the mobile station 30 is currently located (signal 310). The MSC 40a, in turn, transports the SMS message 320 to the mobile station 30 via one of the control data channels such as a Stand-alone Dedicated Control Channel (SDCCH).

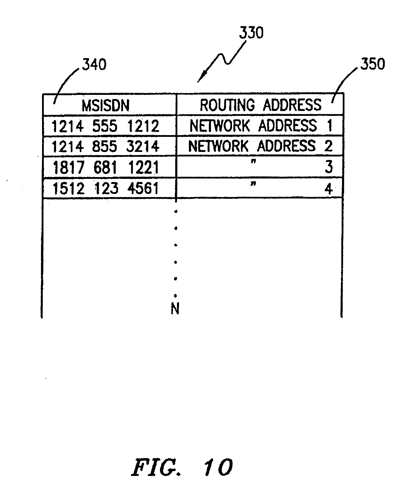

FIG. 10 is a block diagram illustrating an exemplary data structure of a database table 330 within a centralized database such as the VHLR 150. The database table 330 is for correlating a mobile identification number 340 such as an MSISDN number representing a particular mobile station with a network address 350 identifying the associated HLR serving that particular mobile station. By utilizing a relational database as shown in FIG. 10, the centralized database or the VHLR may determine the network address representing the HLR currently serving the ported mobile station. By indexing on the received MSISDN number, the network address can be ascertained and the request signal rerouted. The network address itself may be represented using basically four different formats: an E.164 number representing the HLR; an E.214 number representing a mobile global title number; an E.212 number representing an International Mobile Station Identification (IMSI) number; or the Destination Point Code / Subsystem Number (DPC/SSN) representing the HLR.

It is a further object of the invention to provide a method for retrieving subscriber information representing a mobile station. Said mobile station is associated with a particular home location register HLR, and said particular HLR is storing said subscriber information representing said mobile station. A signal with a mobile station identification number requesting said subscriber information is transmitted from a gateway node to a centralized database. A network address representing said particular HLR is determined by indexing on said mobile station identification number. The signal is rerouted from the centralized database to the HLR using the determined network address. The subscriber information is retrieved in response to a reception of the signal by said HLR. Then, the retrieved subscriber information representing the mobile station is transmitted from the particular HLR to the gateway node.

The mobile station identification number can comprise a Mobile Station Integrated Services Digital Network MSISDN number.

The data signal can comprises a Short Message Service SMS data signal.

The gateway node can comprises a Short Message System - Gateway Mobile Switching Center SMS-GMSC node.

In an embodiment, the transmitting of the signal to said centralized database takes place only if the signal comprises a translation type TT value of ten (10).

In a further embodiment, transmitting the subscriber information comprises the step of transmitting a network address representing a Mobile Switching Center MSC currently serving the mobile station.

The data signal can comprise an incoming voice call.

The gateway can comprise a Gateway Mobile Switching Center GMSC for routing the incoming voice call.

It is a further object of the invention to provide a method for routing, wherein a first signal is routed towards a first home location register HLR serving a mobile station, said mobile station relocated from an area served by a second HLR to an area served by said first HLR without changing an identification number assigned to said mobile station. Correlation data are stored in a centralized database correlating said identification number representing said mobile station with a network address representing said first HLR. Responsive to said first signal, identified by said identification number, said network address representing said first HLR is retrieved from said centralized database by correlating said identification number with said correlation data. Said first signal is routed to said first HLR using said retrieved network address.

Said identification number can comprise a Mobile Station Integrated Service Digital Network MSISDN number for said mobile station.

The steps described can be performed within a centralized database, said centralized database connected to a Gateway Mobile Switching Center GMSC for handling incoming voice calls.

The steps described can be performed within a centralized database, said centralized database connected to a Short Message Service - Gateway Mobile Switching Center SMS-GMSC for handling SMS data.

It is a further object of the invention to provide a system for correlating a mobile station with a particular home location register HLR within a mobile telecommunications system. The system comprises a gateway node for intercepting all incoming data signals intended for said mobile station, and a centralized database connected to said gateway node. Said centralized database stores a first record containing an identification data for said mobile station, and a second record containing a network address representing said HLR. Said second record is correlated with said first record.

Said gateway node of the system can comprise a Short Message Service - Gateway Mobile Switching Center SMS-GMSC for handling SMS data.

Said identification data can comprise a Mobile Station Integrated Services Digital Network MSISDN number.

Said network address can comprise a Global Title GT translation address.

Said network address can comprise a destination point code DPC and a subsystem number SSN.

Said centralized database can be connected to said gateway node via at least one Signaling System No. 7 SS7 Signal Transfer Point STP.

Said gateway node can comprise a Gateway Mobile Switching Center GMSC for handling incoming calls.

Said centralized database can comprise a virtual home location register VHLR.

A further embodiment of the invention provides a system for routing a data signal to a mobile station. The system comprises a mobile switching center MSC serving said mobile station, a home location register HLR storing network information representing said MSC, a gateway node for receiving said data signal and transmitting a request signal requesting network information, a centralized database for receiving said request signal and determining a network address of said HLR and rerouting said request signal using said network address from said centralized database to said HLR. Said HLR transmits network information representing said MSC to said gateway node in response said request signal. Said gateway node responds to said network information by routing said data signal to said MSC indicated by said network information.

Said gateway node can comprise a Short Message Service - Gateway Mobile Switching Center SMS-GMSC node.

Said request signal to said centralized database may be transmitted only if said data signal comprises a Title Translation TT value of ten (10).

Said request signal can comprise a Mobile Application Part MAP signal communicated over a Signaling System No. 7 (SS7).

Said centralized database of the system can store a first record for containing an identification number for said mobile station, a second record for containing a network address representing said HLR, and correlation data for correlating said first record with said second record.

Said network address can comprise a Global Title GT translation address.

Said network address can comprise a Destination Point Code DPC and a Subsystem Number SSN.

Said request signal can include a Mobile Station Integrated Service Digital Network MSISDN number.

Said gateway node can comprise a Gateway Mobile Switching Center GMSC node for handling incoming voice calls.

Said centralized database comprises a virtual home location register VHLR.

A further embodiment of the invention provides a system for retrieving subscriber information representing a mobile station, said mobile station associated with a particular home location register HLR, said particular HLR storing said subscriber information representing said mobile station. The system comprises means for transmitting a signal with a mobile station identification number requesting said subscriber information from a gateway node to a centralized database, means for determining a network address representing said particular HLR using said mobile station identification number, means for rerouting said signal from said centralized database to said HLR using said determined network address, means for retrieving said subscriber information in response to a reception of said signal by said HLR, and means for transmitting said retrieved subscriber information representing said mobile station from said particular HLR to said gateway node.

Said mobile station identification number can comprise a Mobile Station Integrated Services Digital Network MSISDN number.

Said gateway node can comprise a Short Message System - Gateway Mobile Switching Center SMS-GMSC node.

Said gateway of the system can comprise a Gateway Mobile Switching Center GMSC for routing said incoming voice call.

A further embodiment of the invention provides a system for routing a first signal towards a first home location register HLR serving a mobile station, said mobile station relocated from an area served by a second HLR to an area served by said first HLR without changing an identification number assigned to said mobile station. The system comprises means for storing correlation data in a centralized database correlating said identification number representing said mobile station with a network address representing said first HLR. It comprises further, responsive to said first signal, identified by said identification number, means for retrieving said network address representing said first HLR from said centralized database by correlating said identification number with said correlation data, and means for routing said first signal to said first HLR using said retrieved network address.

Said identification number can comprise a Mobile Station Integrated Service Digital Network MSISDN number for said mobile station.

Said centralized database can connect to a Gateway Mobile Switching Center GMSC for handling incoming voice calls.

Said centralized database can connect to a Short Message Service - Gateway Mobile Switching Center SMS-GMSC for handling SMS data.

Although a preferred embodiment of the method and apparatus of the present invention has been illustrated in the accompanying Drawings and described in the foregoing Detailed Description, it will be understood that the invention is not limited to the embodiment disclosed, but is capable of numerous rearrangements, modifications and substitutions without departing from the spirit of the invention as set forth and defined by the following claims.

## Claims

1. A method for retrieving information associated with a mobile station (30), said mobile station being assigned to a particular home location register HLR (90b), and said particular HLR having stored said information associated with said mobile station,
said method **characterized by** the steps of
responsive to an incoming data call signal, transmitting a first signal (145) identifying a mobile station directory number from a gateway node (80) to a centralized database, said first signal requesting subscriber information, and said first signal having an originating address comprising an address for the gateway node and a destination address comprising an address for the centralized database,
responsive to the transmitted first signal (145), receiving a second signal (160) from said particular HLR at the gateway node (80), the second signal including the requested subscriber information, and said second signal having an originating address comprising the network address of the particular HLR and a destination address comprising the address of the gateway node (80) as extracted from the originating address of the first signal.

2. The method of claim 1, wherein said mobile station directory number comprises a Mobile Station Integrated Services Digital Network MSISDN number.

3. The method of claim 1 or 2, wherein said incoming data call signal comprises a Short Message Service SMS data signal.

4. The method of claim 1, 2 or 3 wherein said gateway node comprises a Short Message Service - Gateway Mobile Switching Center SMS-GMSC node.

5. The method of any of the preceding claims, wherein said incoming data call signal includes a translation type TT value, and wherein the step of transmitting the first signal further includes the steps of testing for whether the translation type value equals ten, and responsive thereto, transmitting the first signal.

6. A gateway node in a telecommunications system, arranged to retrieve information associated with a mobile station (30), said mobile station being assigned to a particular home location register HLR (90b), and said particular HLR having stored said information associated with said mobile station, wherein the gateway node is arranged to route an incoming data call signal to a destination,
**characterized in**
**that** said gateway node is arranged to
transmit, responsive to the incoming data call signal, a first signal (145) identifying a mobile station directory number to a centralized database, said first signal requesting subscriber information, and said first signal having an originating address comprising an address for the telecommunications exchange and a destination address comprising an address for the centralized database,
receive, responsive to the transmitted first signal (145), a second signal (160) from said particular HLR at the gateway node (80), the second signal including the requested subscriber information, and said second signal having an originating address comprising the network address of the particular HLR and a destination address comprising the address of the gateway node (80) as extracted from the originating address of the first signal.

7. The gateway node according to claim 6, wherein said incoming data call signal comprises a Short Message Service SMS data signal.

8. The gateway node according to claim 6 or 7, wherein said gateway node comprises a Short Message Service - Gateway Mobile Switching Center SMS-GMSC node.

9. The gateway node according to claim 6, 7 or 9, wherein said incoming data call signal includes a translation type TT value, and wherein the gateway node is further arranged to test for whether the translation type value equals ten, and responsive thereto to transmit the first signal.

10. A method in a telecommunications system, said system for retrieving information associated with a mobile station (30), said mobile station assigned to a particular home location register HLR (90b), said particular HLR storing said information associated with said mobile station,
said method **characterized by** the steps of:
at a centralized database (150), which indexes mobile station directory numbers to network addresses of their respective serving HLRs, receiving from a gateway node (80) a first signal (145) identifying a mobile station directory number, said first signal requesting subscriber information, and
said first signal having an originating address comprising an address for the gateway node (80) and a destination address comprising an address for the centralized database,
determining a network address of the particular HLR by indexing on said mobile station directory number within said centralized database, forwarding (155) the first signal to the particular HLR by replacing in the destination address of the first signal the address for the centralized database with the determined network address of the particular HLR.

11. A database (150) of a telecommunications system, said system for retrieving information associated with a mobile station (30), said mobile station assigned to a particular home location register HLR (90b), said particular HLR storing said information associated with said mobile station,
**characterized in**
**that** said database is arranged to
index mobile station directory numbers to network addresses of their respective serving HLRs,
receive from a gateway node (80) a first signal (145) identifying a mobile station directory number, said first signal requesting subscriber information, and said first signal having an originating address comprising an address for the gateway node (80) and a destination address comprising an address for the database,
determine a network address of the particular HLR by indexing on said mobile station directory number,
forwarding (155) the first signal to the particular HLR by replacing in the destination address of the first signal the address for the database with the determined network address of the particular HLR.

12. Database according to claim 11, wherein the database is a centralized database.

13. A method in a system, said system for retrieving information associated with a mobile station (30), said mobile station assigned to a particular home location register HLR (90b), said particular HLR storing said information associated with said mobile station, the system comprising a centralized database (150) having mobile station directory numbers indexed to network addresses of their respective serving HLRs,
said method **characterized by** the steps of:
receiving (155) at said particular HLR (90b) from a centralized database (150) a first signal identifying a mobile station directory number, said first signal requesting subscriber information, and said first signal having an originating address comprising an address for a gateway node (80) and a destination address comprising an address for the particular HLR, retrieving the requested subscriber information, and
sending a second signal (160) from said particular HLR to the gateway node, the second signal including the retrieved subscriber
information, and said second signal having an originating address comprising the network address of the particular HLR and a destination address comprising the address of the gateway node as extracted from the originating address of the first signal.

14. A home location register HLR (90b) for a system, said system for retrieving information associated with a mobile station (30), said mobile station assigned to the HLR (90b), the system comprising a centralized database (150) having mobile station directory numbers indexed to network addresses of their respective serving HLRs,
said HLR (90b) arranged to store said information associated with said mobile station,
**characterized in**
**that** said HLR is adapted to
receive (155) from a centralized database (150) a first signal identifying a mobile station directory number, said first signal requesting subscriber information, and said first signal having an originating address comprising an address for a gateway node (80) and a destination address comprising an address for the particular HLR,
retrieve the requested subscriber information, and
send a second signal (160) to the gateway node, the second signal including the retrieved subscriber information, wherein said second signal has an originating address comprising the network address of the particular HLR and a destination address comprising the address of the gateway node as extracted from the originating address of the first signal.
